(19) Europäisches Patentamt
European Patent Office
Office européen des brevets

(11) **EP 2 823 554 B1**

(12) **FASCICULE DE BREVET EUROPEEN**

(45) Date de publication et mention de la délivrance du brevet:
**01.06.2022 Bulletin 2022/22**

(21) Numéro de dépôt: **13708777.1**

(22) Date de dépôt: **07.03.2013**

(51) Classification Internationale des Brevets (IPC):
**H02M 3/338** (2006.01)   **H02M 1/42** (2007.01)
**B60L 53/22** (2019.01)   **H02J 7/02** (2016.01)

(52) Classification Coopérative des Brevets (CPC):
**H02M 1/4225; B60L 53/22; H02M 3/3382;**
**H02M 3/3387;** B60L 2200/42; B60L 2200/44;
B60L 2210/10; B60L 2210/30; H02J 7/02;
H02J 2207/20; H02M 1/0048; H02M 1/007;
H02M 1/4208; Y02B 70/10; Y02P 90/60;    (Cont.)

(86) Numéro de dépôt international:
**PCT/EP2013/054633**

(87) Numéro de publication internationale:
**WO 2013/132020 (12.09.2013 Gazette 2013/37)**

(54) **DISPOSITIF DE CHARGE EXTERNE POUR LA BATTERIE D'UN VÉHICULE COMPRENANT UN CONVERTISSEUR AC-DC AVEC UN ÉTAGE ISOLÉ RÉSONANT**

**LADEVORRICHTUNG FÜR DIE BATTERIE EINES FAHRZEUGS MIT EINEM AC-DC WANDLER MIT ISOLIERTEM RESONANZWANDLER**

**CHARGING DEVICE FOR A VEHICLE BATTERY COMPRISING AN AC-DC CONVERTER WITH A RESONANT ISOLATED STAGE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.03.2012 FR 1200728**

(43) Date de publication de la demande:
**14.01.2015 Bulletin 2015/03**

(73) Titulaire: **Intelligent Electronic Systems**
**34130 Saint-Aunes (FR)**

(72) Inventeur: **BIAGINI, Eric**
**F-34470 Perols (FR)**

(74) Mandataire: **Bandpay & Greuter**
**30, rue Notre-Dame des Victoires**
**75002 Paris (FR)**

(56) Documents cités:
**WO-A1-2010/115867    FR-A1- 2 947 114**
**US-A1- 2007 086 222**

• JONG-SOO KIM ET AL: "Design and implementation of a high-efficiency on- board battery charger for electric vehicles with frequency control strategy", VEHICLE POWER AND PROPULSION CONFERENCE (VPPC), 2010 IEEE, IEEE, 1 September 2010 (2010-09-01), pages 1-6, XP031929178, DOI: 10.1109/VPPC.2010.5729042 ISBN: 978-1-4244-8220-7
• COX N R: "A universal power converter for emergency charging of electric vehicle batteries", APPLIED POWER ELECTRONICS CONFERENCE AND EXPOSITION, 1995. APEC '95. CONFERENCE PROCEEDINGS 1995., TENTH ANNUAL DALLAS, TX, USA 5-9 MARCH 1995, NEW YORK, NY, USA,IEEE, US, 5 March 1995 (1995-03-05), pages 965-969, XP010147691, DOI: 10.1109/APEC.1995.469057 ISBN: 978-0-7803-2482-4

- **FARIBORZ MUSAVI ET AL: "Practical design considerations for a LLC multi-resonant DC-DC converter in battery charging applications", APPLIED POWER ELECTRONICS CONFERENCE AND EXPOSITION (APEC), 2012 TWENTY-SEVENTH ANNUAL IEEE, IEEE, 5 February 2012 (2012-02-05), pages 2596-2602, XP032128033, DOI: 10.1109/APEC.2012.6166189 ISBN: 978-1-4577-1215-9**

(52) Classification Coopérative des Brevets (CPC): (Cont.)
Y02T 10/70; Y02T 10/7072; Y02T 10/72; Y02T 10/92; Y02T 90/12; Y02T 90/14

## Description

DOMAINE DE L'INVENTION

La présente invention concerne un dispositif de charge comprenant un convertisseur AC-DC isolé, ce dispositif de charge étant particulièrement approprié pour une utilisation en tant que dispositif embarqué dans un véhicule automobile électrique ou en tant que dispositif externe au véhicule automobile électrique.

ARRIERE-PLAN TECHNIQUE

De nombreux engins mobiles utilisent l'énergie électrique et sont équipés de batteries, par exemple des véhicules électriques, des nacelles, des transpalettes... Ces engins comprennent généralement des chargeurs embarqués, c'est-à-dire des chargeurs de batteries électriques qui sont montés directement sur les engins mobiles. Ils peuvent également être utilisés avec un dispositif chargeur de batterie externe.

La fonction principale de ces chargeurs est la recharge des batteries à partir de l'électricité disponible sur le réseau de distribution électrique. Ils assurent donc une conversion d'un courant alternatif en courant continu.

Les critères recherchés pour les chargeurs, et tout particulièrement pour les chargeurs embarqués, sont un rendement élevé, un faible encombrement, une isolation galvanique, une bonne fiabilité, une sécurité de fonctionnement, une fiable émission de perturbations électromagnétiques, et un faible taux d'harmoniques sur le courant d'entrée.

Afin de mettre en oeuvre la fonction de conversion AC-DC avec isolation galvanique, il est connu d'utiliser une structure à deux convertisseurs :

- Un premier convertisseur AC-DC appelé pré-régulateur, qui comporte un circuit correcteur de facteur de puissance afin de limiter les harmoniques de courant d'entrée.
- Un deuxième convertisseur DC-DC pour assurer la régulation de la charge. Ce convertisseur DC-DC assure également la fonction d'isolation galvanique pour la sécurité d'utilisation.

Le premier convertisseur délivre en général une tension de sortie constante, et le deuxième convertisseur régule la tension et le courant de sortie qui alimentent la batterie.

Un tel système donne satisfaction pour certaines applications telles que l'alimentation d'appareils de faible puissance (téléviseurs à écran plasma ou LCD par exemple). Dans le cadre de l'alimentation de batteries d'appareils motorisés du type véhicules automobiles électriques, où la puissance délivrée est nettement supérieure, le dispositif de charge doit s'adapter à la variabilité importante de la tension et du courant de sortie alimentant la batterie.

Du fait de cette variabilité des conditions de sortie, le convertisseur DC-DC est utilisé sur une large plage et notamment dans des conditions sub-optimales, où les performances du système sont dégradées. Une telle dégradation est particulièrement dommageable compte tenu de la puissance élevée utilisée.

Le document FR 2947114 décrit un émetteur de charge pour la charge d'une batterie d'alimentation électrique d'un véhicule automobile, comprenant une bobine primaire apte à transmettre une puissance sans contact vers une bobine secondaire. L'émetteur de charge peut en outre comprendre un convertisseur AC/DC, un onduleur et un condensateur en série ou en parallèle avec la bobine primaire pour former un circuit résonant.

Le document WO 2010/115867 décrit un convertisseur alimentant un véhicule électrique par transmission inductive d'énergie sans contact. L'inductance de fuite du transformateur est ajustée de façon résonante par un condensateur en série.

Le document US 2007/0086222 décrit un convertisseur AC/DC bidirectionnel pour batterie, comprenant un module de conversion AC/DC et un module de conversion DC/DC. Des moyens de contrôle sont prévus de sorte à maintenir une tension intermédiaire Vc supérieure à la tension de batterie Vb, par une valeur prédéterminée.

Il existe donc un besoin d'améliorer les performances des dispositifs de charge destinés à l'alimentation des batteries d'appareils motorisés, et notamment de véhicules automobiles électriques.

RESUME DE L'INVENTION

L'invention est définie dans les revendications indépendantes 1 et 2.

La présente invention permet de surmonter les inconvénients de l'état de la technique. Elle fournit plus particulièrement un dispositif de charge pour appareil motorisé (et notamment pour véhicule) présentant des performances améliorées.

Ceci est accompli en ajustant, au cours de la charge, la tension continue délivrée par le premier convertisseur AC-DC en fonction de paramètres (effectifs) de fonctionnement du deuxième convertisseur DC-DC. En effet, quel que soit le type de convertisseur DC-DC utilisé, il présente des conditions d'utilisation optimales pour son fonctionnement qui offrent les meilleures caractéristiques comme par exemple le rendement, le niveau des perturbations électromagnétiques générées, ou toute autre performance recherchée dans l'application. Ces conditions sont dépendantes de divers paramètres comme par exemple la tension d'entrée, la tension de sortie, le rapport de ces deux tensions, la puissance transférée.

L'ajustement est accompli en fonction soit de la tension de sortie, soit de la puissance, soit d'un paramètre interne du convertisseur tel que par exemple la fréquence de découpage ou le rapport cyclique, ou tout autre paramètre de fonctionnement.

A titre d'exemple, la tension du courant continu délivré par le premier convertisseur AC-DC est ajustée en fonction de la tension et de l'intensité du courant de sortie délivré à la batterie, et optionnellement en fonction de la puissance de ce courant. De la sorte, le deuxième convertisseur DC-DC fonctionne toujours dans des conditions proches de conditions optimales de fonctionnement prédéfinies.

L'avantage offert par l'invention est particulièrement important lorsque le deuxième convertisseur DC-DC est un convertisseur résonant (tel qu'un convertisseur comportant un circuit résonant série LC ou LLC par exemple), car dans ce cas le rendement et l'efficacité du convertisseur dépendent fortement des paramètres de fonctionnement dudit deuxième convertisseur.

BREVE DESCRIPTION DES FIGURES

La **figure 1** représente de manière schématique un dispositif de charge selon l'invention, fonctionnant en mode de charge d'une batterie.

La **figure 2** est un schéma de principe du circuit électrique d'un convertisseur DC-DC utilisé dans le cadre de l'invention, selon un mode de réalisation.

La **figure 3** est un schéma de principe du circuit électrique d'un convertisseur AC-DC utilisé dans le cadre de l'invention, selon un mode de réalisation.

La **figure 4** représente de manière schématique un mode de réalisation d'un dispositif de charge selon l'invention, fonctionnant en mode de charge d'une batterie.

La **figure 5** représente de manière schématique un circuit électrique permettant le contrôle de la tension du courant intermédiaire, selon un mode de réalisation de l'invention.

La **figure 6** est une courbe illustrant le gain (en ordonnée) en fonction du rapport entre la fréquence de découpage et la fréquence de résonance (en abscisse) pour différents coefficients de qualité notés Q, pour le convertisseur DC-DC illustré à la **figure 2.**

DESCRIPTION DE MODES DE REALISATION DE L'INVENTION

L'invention est maintenant décrite plus en détail et de façon non limitative dans la description qui suit.

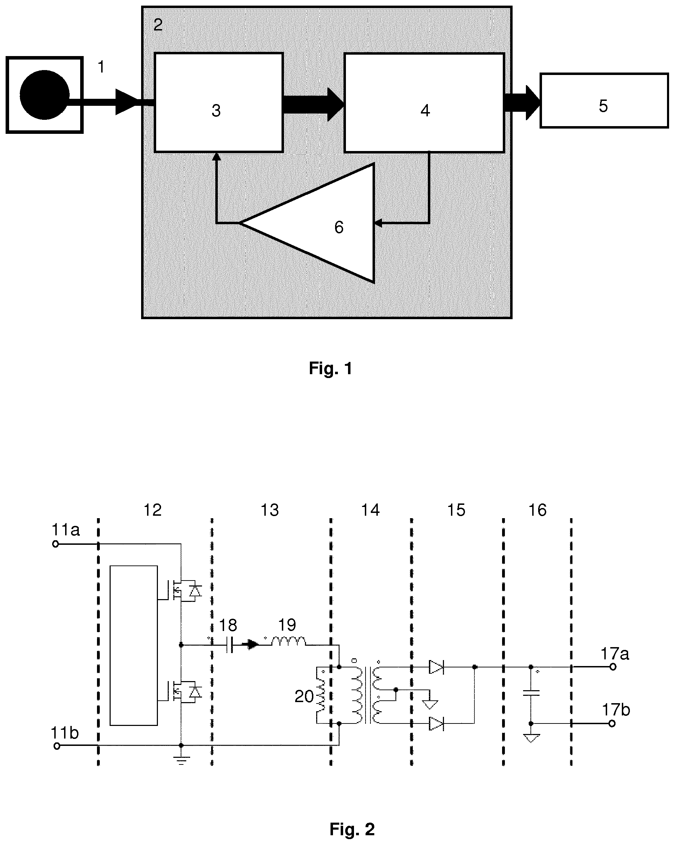

En faisant référence à la **figure 1,** un dispositif de charge 2 est destiné à la charge d'une batterie 5 d'appareil motorisé. Ce dispositif peut soit être intégré dans l'appareil motorisé, soit dans un système de charge externe à l'appareil motorisé, ou bien être autonome. La batterie 5 est adaptée à délivrer, et à être chargée par, un courant continu dit courant de sortie présentant une tension notée $U_s$.

Selon un mode de réalisation préféré, l'appareil motorisé est un véhicule, notamment un véhicule automobile, à alimentation électrique. Dans d'autres modes de réalisation, l'appareil motorisé peut être un engin de manutention tel qu'un chariot élévateur, une nacelle élévatrice, ou un transpalette.

La batterie 5 représente la batterie de traction du véhicule (ou de l'engin), c'est-à-dire la batterie responsable de l'alimentation du moteur du véhicule (ou de l'engin). Il est entendu que cette batterie 5 peut représenter une batterie unique ou un ensemble de batteries.

La tension $U_s$ vaut en général de 20 à 550 V, de préférence de 24 à 500 V.

Lors de la charge de la batterie 5, la tension $U_s$ peut varier par exemple entre des valeurs extrémales de 300 V et 500 V.

Le dispositif de charge 2 comprend un premier module de conversion 3 et un deuxième module de conversion 4. Selon un mode de réalisation, le dispositif de charge de l'invention comprend un boîtier, dans lequel sont disposés le premier module de conversion 3 et le deuxième module de conversion 4 (et éventuellement les moyens de contrôle 6 détaillés ci-dessous). Ce boîtier peut être intégré ou embarqué dans l'appareil motorisé ou véhicule ; ou bien être disposé dans un système externe, par exemple une borne de charge pour véhicule.

Le premier module de conversion 3 est adapté à convertir un courant d'alimentation alternatif (courant d'entrée) en courant continu dit intermédiaire et présentant une tension notée $U_i$. En mode de charge, une source d'alimentation 1 (telle que le réseau électrique) alimente en courant alternatif le premier module de conversion 3.

Le courant d'entrée peut être soit monophasé, par exemple avec une tension de 85 à 265 V, soit biphasé, par exemple avec une tension de 200 à 250 V, soit multiphasé et notamment triphasé, par exemple avec une tension de 380 à 420 V.

Le premier module de conversion 3 alimente en courant continu de tension $U_i$ le deuxième module de conversion 4.

Le deuxième module de conversion 4 est adapté à convertir le courant continu intermédiaire de tension $U_i$ en courant continu de sortie de tension $U_s$ qui alimente la batterie.

Le premier module de conversion 3 comporte de préférence un circuit correcteur de puissance, afin de limiter les harmoniques de courant d'entrée. Un tel circuit présente également l'avantage de fonctionner sur une large plage de tensions d'entrée.

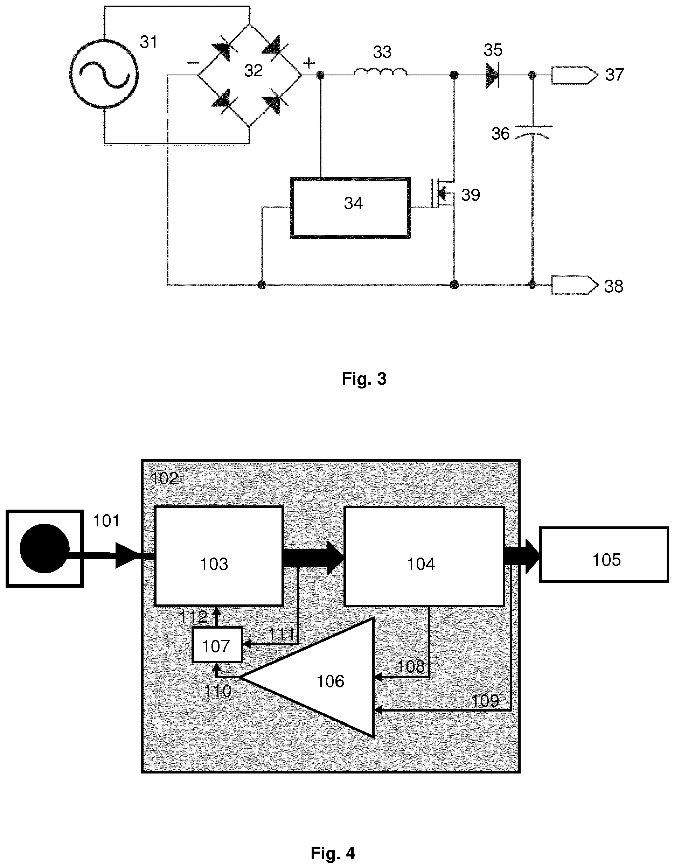

En faisant référence à la **figure 3** qui représente pour exemple le schéma de principe d'un convertisseur monophasé à absorption sinusoïdale (PFC) élévateur (Boost), le convertisseur 3 accepte une tension alternative d'entrée universelle, par exemple de 80 à 265 V, et délivre une tension de sortie continue, par exemple 400 V.

Dans l'exemple illustré, la source d'alimentation 31 est connectée à un circuit correcteur de facteur de puissance, monophasé dans l'exemple, constitué d'un pont de diodes 32, une inductance 33, un circuit de commande et régulation 34, un commutateur commandé 39 représenté ici par un transistor à effet de champ à grille isolée (MOSFET), une diode de redressement 35 et un condensateur de filtrage 36. Le courant dit intermédiaire dans la description précédente est obtenu aux bornes 37, 38 du circuit. Ce circuit agit comme un pré-régulateur dont le courant d'entrée présente une forme identique à la forme de la tension du courant d'entrée. Dans le cas d'une alimentation sinusoïdale, le courant absorbé est sinusoïdal, et la sortie est un courant de tension continue.

En faisant référence à la **figure 2**, le deuxième module de conversion 4 comprend des bornes d'entrée 11a, 11b destinées à recevoir le courant de tension $U_i$ issu du premier module de conversion 3. Le courant continu de tension $U_s$ est délivré au niveau de bornes de sortie 17a, 17b.

Le deuxième module de conversion 4 est de préférence un module de conversion à découpage avec isolation galvanique, c'est-à-dire qu'il comporte: un sous-module de découpage 12 convertissant le courant continu intermédiaire en courant alternatif dont la fréquence est appelée fréquence de découpage ; un sous-module de transformation 14, recevant ledit courant alternatif, comprenant un couplage magnétique de deux circuits et assurant l'isolation galvanique ; et un sous-module de redressement 15 convertissant le courant alternatif issu du sous-module de transformation en le courant continu de sortie.

De préférence encore, le deuxième module de conversion 4 est un convertisseur résonant. Un convertisseur résonant est un convertisseur pour lequel il existe au moins une fréquence de résonance donnée, les conditions de commutation du circuit à découpage étant optimales lorsque la fréquence de découpage est égale à la fréquence de résonance.

Ce circuit résonant, à condition que la fréquence de découpage soit proche de la fréquence de résonance, permet un fonctionnement avec un rendement élevé.

Dans l'exemple illustré, le deuxième module de conversion 4 est à la fois un module de conversion à découpage avec isolation galvanique et un convertisseur résonant.

Plus précisément, le sous-module de découpage 12 est connecté aux bornes d'entrée 11a, 11b. Le courant alternatif produit par le sous-module de découpage 12 présente typiquement une forme carrée. Il peut être produit au moyen d'éléments de commutation. A titre de sous-module de découpage 12, on peut utiliser par exemple un demi-pont ou un pont complet.

Un circuit résonant 13 est connecté au sous-module de découpage 12. Il s'agit ici d'un circuit de type LLC, c'est-à-dire comportant un condensateur 18, une première inductance 19 et une deuxième inductance 20 en série. On pourrait toutefois utiliser également par exemple un circuit de type LC comportant un condensateur et une unique inductance.

Le sous-module de transformation 14 est connecté au circuit résonant 13 ; dans l'exemple illustré, il est connecté aux bornes de la deuxième inductance 20.

Le circuit résonant 13 comporte au moins une fréquence de résonance. Un circuit LLC par exemple comporte deux fréquences de résonance, la fréquence de résonance d'intérêt pour les besoins de l'invention étant la plus élevée des deux. Cette fréquence est déterminée par les valeurs de capacité et d'inductance des condensateurs et inductances présentes dans le circuit.

Dans l'exemple illustré, si Lr représente la valeur d'inductance de la première inductance 19, et Cr représente la capacité du condensateur 18, cette fréquence de résonance vaut :

$$F_r = \frac{1}{2\Pi\sqrt{Lr.Cr}}$$

Aux bornes du sous-module de transformation 14 est connecté le sous-module de redressement 15. Le sous-module de redressement 15 comporte typiquement un ensemble de diodes, ou de transistors à effet de champ à grille isolée (MOSFET) dans le cas d'un redressement synchrone, ou tout autre composant aux fonctions équivalentes.

En sortie du sous-module de redressement 15, on peut prévoir un sous-module de filtration 16. Ce sous-module de filtration 16 peut par exemple comprendre un filtre passe-bas comprenant un condensateur.

Les bornes de sortie 17a, 17b du deuxième module de conversion 4 sont connectées au sous-module de filtration 16.

A titre de variante, on peut remplacer le circuit résonant 13 décrit ci-dessus par tout type de circuit à isolation galvanique (par exemple convertisseur à transfert direct à modulation de rapport cyclique (« forward », « push pull », « hacheur série »,...) ou à modulation de déphasage (« phase shift »).

Pour chaque deuxième module de conversion 4 donné, on peut définir des conditions de fonctionnement optimales.

L'invention prévoit donc un asservissement sous la forme de moyens de contrôle 6 du premier module de conversion 3, adaptés à ajuster la tension $U_i$ du courant intermédiaire selon l'évolution de la charge de la batterie 5, de sorte que le deuxième module de conversion 4 fonctionne dans les conditions optimales prédéfinies pratiquement tout au long de la charge.

Cet asservissement peut se faire de plusieurs façons, soit une loi de variation établie en fonction des conditions de tension et courant mesurées, soit à partir de la mesure et du contrôle direct du fonctionnement du convertisseur 4.

Dans l'exemple d'un convertisseur de type résonant, il s'agit en général principalement de maintenir la fréquence de découpage proche de la fréquence de résonance du convertisseur.

Plus précisément, en cas de variation de la tension $U_s$ et / ou de la puissance du courant de sortie du fait de la charge (batterie 5), un asservissement permet de modifier la fréquence ou / et le rapport cyclique de découpage du deuxième module de conversion 4 afin d'adapter la conversion DC-DC aux nouvelles conditions imposées par la charge.

Cet asservissement a tendance à éloigner le deuxième module de conversion 4 de ses conditions de fonctionnement optimales. Par conséquent, on prévoit un deuxième asservissement sur le premier module de conversion 3 afin de modifier la valeur de la tension $U_i$ du courant intermédiaire. La fréquence de découpage peut ainsi être ramenée à sa valeur de consigne, de sorte que le deuxième module de conversion 4 retrouve ses conditions de fonctionnement optimales prédéfinies.

Dans le cas d'un convertisseur 4 de type résonant, la valeur de consigne de la fréquence de découpage peut notamment être égale à la fréquence de résonance. En effet, le rendement est maximal et les perturbations électromagnétiques sont minimales lorsque la fréquence de découpage est égale à la fréquence de résonance.

Alternativement, on peut choisir d'ajuster la fréquence de découpage à une valeur de fréquence distincte de la fréquence de résonance et notamment supérieure à la fréquence de résonance, mais proche de celle-ci.

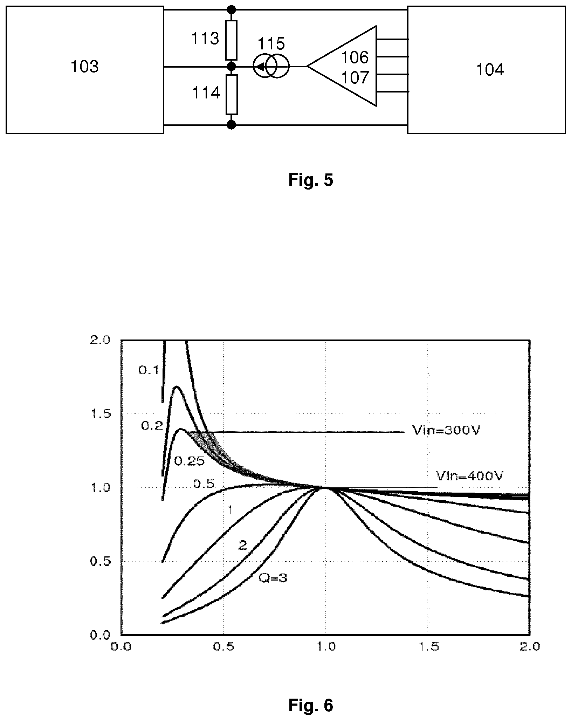

Dans le cas du circuit résonant 13 LLC illustré, en faisant référence à l'exemple de la **figure 6** qui représente le gain en tension en fonction de la fréquence de découpage Fs normalisée par rapport à la fréquence de résonance Fr, on voit que lorsque le coefficient de qualité Q vaut 3, le gain présente un maximum quand Fs/Fr = 1. Il est alors avantageux de régler la consigne de la fréquence de découpage à une valeur de 15 à 20 % environ supérieure à la valeur de la fréquence de résonance, dans une zone où le gain varie de manière monotone en fonction de la fréquence de découpage.

La **figure 4** illustre un mode de réalisation particulier du dispositif de charge décrit de manière générale ci-dessus en relation avec la **figure 1.** Selon ce mode de réalisation particulier, le dispositif de charge 102 comprend encore un premier module de conversion 103 et un deuxième module de conversion 104, et il est destiné à la charge d'une batterie 105, à partir d'une source d'alimentation 101, ainsi que décrit ci-dessus. Il comporte en outre des moyens de contrôle 106, 107 du premier module de conversion 103, qui selon ce mode de réalisation particulier comportent un module de mesure 106 et un module de commande 107.

Le module de mesure 106 comporte par exemple une entrée 108 apte à recevoir une information relative à la fréquence de découpage du deuxième module de conversion 104, ainsi qu'une entrée 109 apte à recevoir au moins une information relative au courant de sortie (courant délivré par le deuxième module de conversion 104). Par exemple, l'entrée 109 peut être apte à recevoir des informations relatives à la tension, à l'intensité et / ou à la puissance du courant de sortie.

Une ligne de transmission 110 est par ailleurs prévue entre le module de mesure 106 et le module de commande 107. Le module de commande 107 comporte par ailleurs une entrée 111 apte à recevoir une information relative à la tension du courant intermédiaire (tension $U_i$). Enfin, le module de commande 107 comporte une sortie de commande 112 apte à modifier le fonctionnement du premier module de conversion 103.

Le mode de réalisation particulier discuté ci-dessus permet de moduler la tension du courant intermédiaire alimentant le deuxième module de conversion 104, en fonction d'une ou plusieurs informations choisies par exemple parmi les valeurs de tension du courant de sortie, d'intensité du courant de sortie, de puissance du courant de sortie, de fréquence de découpage du deuxième module de conversion, et de tension du courant intermédiaire.

En faisant référence à la **figure 5,** un exemple illustratif d'un moyen permettant l'ajustement de la tension du courant intermédiaire est à présent décrit.

Dans cet exemple illustratif, le premier module de conversion 103 comporte un dispositif de mesure de la tension du courant délivré par celui-ci (tension notée $U_i$ ci-dessus). Ce dispositif comporte par exemple un circuit diviseur de tension comportant deux résistances 113, 114. Les moyens de contrôle 106, 107 du premier module de conversion 103 comportent quant à eux un générateur d'un courant de consigne 115, qui est relié aux bornes d'une des résistances 113, 114. De la sorte, les moyens de contrôle 106, 107 modulent la mesure de la tension du courant intermédiaire par le premier module de conversion 103, *via* le générateur de courant de consigne 115.

A titre d'exemple, on peut utiliser un contrôleur numérique disposant des mesures respectives de la fréquence de découpage, de l'intensité du courant de sortie, de la tension du courant de sortie, de la tension du courant intermédiaire, afin de générer un courant de consigne qui est délivré au dispositif de mesure de la tension du courant par le premier module de conversion 103, réalisant ainsi l'optimisation recherchée.

**Revendications**

1. Dispositif de charge (2) pour une batterie (5) d'un appareil motorisé, ledit dispositif de charge (2) étant adapté à être monté sur l'appareil motorisé, et comprenant :

    - un boîtier ;
    - un premier module de conversion (3) disposé dans le boîtier ;
    - un deuxième module de conversion (4) disposé dans le boîtier, comportant un circuit résonant (13) présentant au moins une fréquence de résonance ;

- des moyens de contrôle (6) du premier module de conversion (3) disposés dans le boîtier ;

le premier module de conversion (3) étant adapté à convertir un courant alternatif d'entrée en un courant intermédiaire et à alimenter le deuxième module de conversion (4) avec ledit courant intermédiaire ;

le deuxième module de conversion (4) étant adapté à convertir le courant intermédiaire en un courant de sortie, et à alimenter la batterie (5) avec ledit courant de sortie ;

le courant intermédiaire étant un courant continu et le courant de sortie étant également un courant continu ;

les moyens de contrôle (6) étant adaptés à ajuster la tension du courant intermédiaire en fonction de paramètres de fonctionnement du deuxième module de conversion (3), selon l'évolution de la charge de la batterie (5).

2. Dispositif de charge (2) pour une batterie (5) d'un appareil motorisé, ledit dispositif de charge (2) étant adapté à être connecté à l'appareil motorisé à l'extérieur de celui-ci, et comprenant :

- un boîtier ;
- un premier module de conversion (3) disposé dans le boîtier ;
- un deuxième module de conversion (4) disposé dans le boîtier, comportant un circuit résonant (13) présentant au moins une fréquence de résonance ;
- des moyens de contrôle (6) du premier module de conversion (3) disposés dans le boîtier ;

le premier module de conversion (3) étant adapté à convertir un courant alternatif d'entrée en un courant intermédiaire et à alimenter le deuxième module de conversion (4) avec ledit courant intermédiaire ;

le deuxième module de conversion (4) étant adapté à convertir le courant intermédiaire en un courant de sortie, et à alimenter la batterie (5) avec ledit courant de sortie ;

le courant intermédiaire étant un courant continu et le courant de sortie étant également un courant continu ;

les moyens de contrôle (6) étant adaptés à ajuster la tension du courant intermédiaire en fonction de paramètres de fonctionnement du deuxième module de conversion (3), selon l'évolution de la charge de la batterie (5).

3. Dispositif selon la revendication 1 ou 2, dans lequel les moyens de contrôle (6) sont adaptés à ajuster la tension du courant intermédiaire en fonction de la tension et / ou de la puissance et / ou de l'intensité du courant de sortie.

4. Dispositif selon l'une des revendications 1 à 3, dans lequel le deuxième module de conversion (4) est un module de conversion à découpage comportant une isolation galvanique, fonctionnant à une fréquence de découpage, qui de préférence est variable ; et de préférence les moyens de contrôle (6) sont adaptés à ajuster la tension du courant intermédiaire en fonction de ladite fréquence de découpage.

5. Dispositif selon l'une des revendications 1 à 4, dans lequel le deuxième module de conversion (4) comprend un sous-module de découpage (12) associé au circuit résonant (13), adapté à convertir le courant intermédiaire en un premier courant alternatif ayant une fréquence de découpage ; un sous-module de transformation (14) adapté à convertir le premier courant alternatif en un deuxième courant alternatif ; un sous-module de redressement (15) adapté à convertir le deuxième courant alternatif en le courant de sortie ; et dans lequel, de préférence, les moyens de contrôle (6) sont adaptés à ajuster la tension du courant intermédiaire de sorte que la fréquence de découpage puisse être ajustée à une valeur de consigne ; ladite valeur de consigne étant de préférence égale à la fréquence de résonance ou supérieure à la fréquence de résonance, et de manière plus particulièrement préférée valant de 1,05 à 1,80 fois la fréquence de résonance, et de manière encore plus particulièrement préférée de 1,10 à 1,50 fois la fréquence de résonance.

6. Dispositif selon l'une des revendications 1 à 5, dans lequel le circuit résonant (13) est un circuit de type LC ou de type LLC comportant au moins un condensateur (18) et au moins une inductance (19, 20); et/ou dans lequel le premier module de conversion (3) comporte un circuit correcteur de facteur de puissance.

7. Dispositif selon l'une des revendications 1 à 6, dans lequel le premier module de conversion (3) comporte un dispositif de mesure de la tension du courant intermédiaire ainsi que des moyens d'ajustement de ladite tension à une tension de consigne ; et dans lequel les moyens de contrôle (6) sont adaptés à moduler les moyens de mesure de la tension du courant intermédiaire.

8. Dispositif selon l'une des revendications 1 à 7, dans lequel les moyens de contrôle (6) comprennent un contrôleur numérique du premier module de conversion (3).

9. Dispositif selon l'une des revendications 1 à 8, adapté à fonctionner avec une tension du courant intermédiaire valant de 270 à 440 V, de préférence de 290 à 430 V ; et / ou une tension du courant de sortie valant de 20 à 550 V, de préférence de 24 à 500 V ; et / ou une puissance du courant de sortie valant de 500 à 6000 W, de préférence de 500 à 3600 W.

10. Procédé de charge d'une batterie d'un appareil motorisé, comprenant :

  - une première conversion d'un courant alternatif d'alimentation en un courant intermédiaire, dans un boîtier d'un dispositif de charge ;
  - une deuxième conversion du courant intermédiaire en un courant de sortie, au moyen d'un module de conversion comportant un circuit résonant présentant une fréquence de résonance, dans ledit boîtier du dispositif de charge ;
  - l'alimentation de la batterie par le courant de sortie ;

    le courant intermédiaire étant un courant continu, et le courant de sortie étant également un courant continu ;
    le procédé comprenant en outre :

      - l'ajustement de la tension du courant intermédiaire en fonction de paramètres de la deuxième conversion, selon l'évolution de la charge de la batterie ;

    le procédé étant mis en oeuvre dans l'appareil motorisé.

11. Procédé de charge d'une batterie d'un appareil motorisé, comprenant :

  - une première conversion d'un courant alternatif d'alimentation en un courant intermédiaire, dans un boîtier d'un dispositif de charge ;
  - une deuxième conversion du courant intermédiaire en un courant de sortie, au moyen d'un module de conversion comportant un circuit résonant présentant une fréquence de résonance, dans ledit boîtier du dispositif de charge ;
  - l'alimentation de la batterie par le courant de sortie ;

    le courant intermédiaire étant un courant continu, et le courant de sortie étant également un courant continu ;
    le procédé comprenant en outre :

      - l'ajustement de la tension du courant intermédiaire en fonction de paramètres de la deuxième conversion, selon l'évolution de la charge de la batterie ;

    le procédé étant mis en oeuvre à l'extérieur de l'appareil motorisé.

12. Procédé selon la revendication 11 ou 12, dans lequel la tension du courant intermédiaire est ajustée en fonction de la valeur de la tension et / ou de la puissance et / ou de l'intensité du courant de sortie ; et/ou dans lequel la tension du courant intermédiaire est ajustée en fonction de la fréquence de résonance.

13. Procédé selon l'une des revendications 11 à 13, dans lequel la deuxième conversion comprend une conversion intermédiaire d'un courant continu en un courant alternatif ayant une fréquence de découpage, la fréquence de découpage étant de préférence ajustée à une valeur de consigne, ladite valeur de consigne étant de préférence égale à la fréquence de résonance ou supérieure à la fréquence de résonance, et valant de manière plus particulièrement préférée de 1,05 à 1,80 fois la fréquence de résonance, de manière encore plus particulièrement préférée de 1,10 à 1,50 fois la fréquence de résonance.

14. Procédé selon l'une des revendications 11 à 14, dans lequel la tension du courant intermédiaire vaut de 270 à 440 V, de préférence de 290 à 430 V ; et / ou dans lequel la tension du courant de sortie vaut de 20 à 550 V, de préférence de 24 à 500 V ; et / ou dans lequel la puissance du courant de sortie vaut de 500 à 6000 W, de préférence de 500 à 3600 W.

15. Appareil motorisé (8) comprenant le dispositif de charge (2) selon l'une des revendications 1 ou 3 à 10, ainsi que la batterie (5), ledit appareil motorisé (8) étant de préférence un véhicule, et de manière plus particulièrement préférée un véhicule automobile à alimentation électrique.

**Patentansprüche**

1. Ladevorrichtung (2) für eine Batterie (5) eines motorisierten Geräts, wobei die Ladevorrichtung (2) ausgelegt ist, um auf das motorisierte Gerät montiert zu sein, und umfassend :

  - ein Gehäuse;
  - ein erstes Wandlungsmodul (3), das in dem Gehäuse angeordnet ist;
  - ein zweites Wandlungsmodul (4), das in dem Gehäuse angeordnet ist, umfassend einen Resonanzkreis (13), der mindestens eine Resonanzfrequenz aufweist;
  - Steuermittel (6) des ersten Wandlungsmoduls (3), die in dem Gehäuse angeordnet sind,

    wobei das erste Wandlungsmodul (3) ausgelegt ist, um einen Eingangs-Wechselstrom in einen Zwischenstrom zu wandeln und das zweite Wandlungsmodul (4) mit dem Zwischenstrom zu versorgen;

wobei das zweite Wandlungsmodul (4) ausgelegt ist, um den Zwischenstrom in einen Ausgangsstrom zu wandeln und die Batterie (5) mit dem Ausgangsstrom zu versorgen;

wobei der Zwischenstrom ein Gleichstrom ist und der Ausgangsstrom ebenfalls ein Gleichstrom ist;

wobei die Steuermittel (6) ausgelegt sind, um die Spannung des Zwischenstroms je nach den Funktionsparametern des zweiten Wandlungsmoduls (3) gemäß dem Fortschreiten der Ladung der Batterie (5) einzustellen.

2. Ladevorrichtung (2) für eine Batterie (5) eines motorisierten Geräts, wobei die Ladevorrichtung (2) ausgelegt ist, um mit dem motorisierten Gerät an der Außenseite desselben verbunden zu sein, und umfassend:

- ein Gehäuse;
- ein erstes Wandlungsmodul (3), das im Gehäuse angeordnet ist;
- ein zweites Wandlungsmodul (4), das in dem Gehäuse angeordnet ist, umfassend einen Resonanzkreis (13), der mindestens eine Resonanzfrequenz aufweist;
- Steuermittel (6) des ersten Wandlungsmoduls (3), das im Gehäuse angeordnet ist;

wobei das Wandlungsmodul (3) ausgelegt ist, um einen Eingangs-Wechselstrom in einen Zwischenstrom zu wandeln und das zweite Wandlungsmodul (4) mit dem Zwischenstrom zu versorgen;

wobei das zweite Wandlungsmodul (4) ausgelegt ist, um den Zwischenstrom in einen Ausgangsstrom zu wandeln und die Batterie (5) mit dem Ausgangsstrom zu versorgen;

wobei der Zwischenstrom ein Gleichstrom ist und der Ausgangsstrom ebenfalls ein Gleichstrom ist;

wobei die Steuermittel (6) ausgelegt sind, um die Spannung des Zwischenstroms je nach den Funktionsparametern des zweiten Wandlungsmoduls (3) gemäß dem Fortschreiten der Ladung der Batterie (5) einzustellen.

3. Verfahren nach Anspruch 1 oder 2, wobei die Steuermittel (6) ausgelegt sind, um die Spannung des Zwischenstroms je nach der Spannung und/oder der Leistung und/oder der Intensität des Ausgangsstroms einzustellen.

4. Ladevorrichtung nach einem der Ansprüche 1 bis 3, wobei das zweite Wandlungsmodul (4) ein Schneidewandlungsmodul ist, umfassend eine galvanische Isolierung, die mit einer Schneidefrequenz funktioniert, die vorzugsweise variabel ist; und vorzugsweise die Steuermittel (6) ausgelegt sind, um die Spannung des Zwischenstroms je nach der Schneidefrequenz einzustellen.

5. Ladevorrichtung nach einem der Ansprüche 1 bis 4, wobei das zweite Wandlungsmodul (4) ein Schneideuntermodul (12) umfasst, das dem Resonanzkreis (13) zugewiesen ist, ausgelegt, um den Zwischenstrom in einen ersten Wechselstrom mit einer Schneidefrequenz zu wandeln; ein Umformungsuntermodul (14), das ausgelegt ist, um den ersten Wechselstrom in einen zweiten Wechselstrom zu wandeln; ein Gleichrichtungsuntermodul (15), das ausgelegt ist, um den zweiten Wechselstrom in den Ausgangsstrom zu wandeln; und wobei vorzugsweise die Steuermittel (6) ausgelegt sind, um die Spannung des Zwischenstroms einzustellen, so dass die Schneidefrequenz auf einen Sollwert eingestellt werden kann; wobei der Sollwert vorzugsweise gleich der Resonanzfrequenz oder höher als die Resonanzfrequenz ist und auf besonders bevorzugte Weise einen Wert von 1,05 bis 1,80 Mal der Resonanzfrequenz aufweist und auf noch stärker bevorzugte Weise von 1,10 bis 1,50 Mal der Resonanzfrequenz aufweist.

6. Vorrichtung nach einem der Ansprüche 1 bis 5, wobei der Resonanzkreis (13) ein Kreis vom Typ LC oder vom Typ LLC ist, umfassend mindestens einen Kondensator (18) und mindestens eine Induktivität (19, 20); und/oder wobei das erste Wandlungsmodul (3) eine Korrekturschaltung des Leistungsfaktors umfasst.

7. Ladevorrichtung nach einem der Ansprüche 1 bis 6, wobei das erste Wandlungsmodul (3) eine Vorrichtung zum Messen der Spannung des Zwischenstroms sowie Mittel zum Einstellen der Spannung auf eine Sollspannung umfasst; und wobei die Steuermittel (6) ausgelegt sind, um die Mittel zur Messung der Spannung des Zwischenstroms zu modulieren.

8. Vorrichtung nach einem der Ansprüche 1 bis 7, wobei die Steuermittel (6) eine digitale Steuerung des ersten Wandlungsmoduls (3) umfassen.

9. Ladevorrichtung nach einem der Ansprüche 1 bis 8, die ausgelegt ist, um mit einer Spannung des Zwischenstroms zu funktionieren, die einen Wert von 270 bis 440 V, vorzugsweise von 290 bis 430 V aufweist; und/oder wobei eine Spannung des Ausgangsstroms die einen Wert von 20 bis 550 V, vorzugsweise von 24 bis 500 V aufweist; und/oder einer Leistung des Ausgangsstroms, die einen Wert von 500 bis 6000 W, vorzugsweise von 500 bis 3600 W aufweist.

10. Verfahren zum Laden einer Batterie eines motorisierten Geräts, umfassend:

- eine erste Wandlung eines Versorgungswechselstroms in einen Zwischenstrom in einem Gehäuse einer Ladevorrichtung;
- eine zweite Wandlung des Zwischenstroms in einen Ausgangsstrom mit Hilfe eines Wandlungsmoduls, umfassend einen Resonanzkreis, der eine Resonanzfrequenz aufweist, in dem Gehäuse der Ladevorrichtung;
- die Versorgung der Batterie durch den Ausgangsstrom;

wobei der Zwischenstrom ein Gleichstrom ist und der Ausgangsstrom ebenfalls ein Gleichstrom ist;
wobei das Verfahren außerdem Folgendes umfasst:

- die Einstellung der Spannung des Zwischenstroms je nach den Parametern der zweiten Wandlung gemäß dem Fortschreiten der Ladung der Batterie,

wobei das Verfahren im dem motorisierten Gerät implementiert wird.

11. Verfahren zum Laden einer Batterie eines motorisierten Geräts, umfassend:

- eine erste Wandlung eines Versorgungswechselstroms in einen Zwischenstrom in einem Gehäuse einer Ladevorrichtung;
- eine zweite Wandlung des Zwischenstroms in einen Ausgangsstrom mit Hilfe eines Wandlungsmoduls, umfassend einen Resonanzkreis, der eine Resonanzfrequenz aufweist, in dem Gehäuse der Ladevorrichtung;
- die Versorgung der Batterie durch den Ausgangsstrom;

wobei der Zwischenstrom ein Gleichstrom ist, und wobei der Ausgangsstrom ebenfalls ein Gleichstrom ist;
wobei das Verfahren außerdem Folgendes umfasst:

- die Einstellung der Spannung des Zwischenstroms je nach den Parametern der zweiten Wandlung gemäß dem Fortschreiten der Ladung der Batterie;

wobei das Verfahren an der Außenseite des motorisierten Geräts implementiert wird.

12. Verfahren nach Anspruch 11 oder 12, wobei die Spannung des Zwischenstroms je nach dem Wert der Spannung und/oder der Leistung und/oder der Intensität des Ausgangsstroms eingestellt wird; und/oder wobei die Spannung des Zwischenstroms je nach der Resonanzfrequenz eingestellt wird.

13. Verfahren nach einem der Ansprüche 11 bis 13, wobei die zweite Wandlung eine Zwischenwandlung eines Gleichstroms in einen Wechselstrom mit einer Schneidefrequenz umfasst, wobei die Schneidefrequenz vorzugsweise auf einen Sollwert eingestellt ist, wobei der Sollwert vorzugsweise gleich der Resonanzfrequenz oder höher als die Resonanzfrequenz ist und insbesondere vorzugsweise einen Wert von 1,05 bis 1,80 Mal der Resonanzfrequenz aufweist, und auf noch stärker bevorzugte Weise von 1,10 bis 1,50 Mal der Resonanzfrequenz aufweist.

14. Verfahren nach einem der Ansprüche 11 bis 14, wobei die Spannung des Zwischenstroms einen Wert von 270 bis 440 V, vorzugsweise von 290 bis 430 V aufweist; und/oder wobei die Spannung des Ausgangsstroms einen Wert von 20 bis 550 V, vorzugsweise von 24 bis 500 V aufweist; und/oder wobei die Leistung des Ausgangsstroms einen Wert von 500 bis 6000 W, vorzugsweise von 500 bis 3600 W aufweist.

15. Motorisiertes Gerät (8), umfassend die Ladevorrichtung (2) nach einem der Ansprüche 1 oder 3 bis 10, sowie die Batterie (5), wobei das motorisierte Gerät (8) vorzugsweise ein Fahrzeug, insbesondere ein Kraftfahrzeug mit elektrischer Versorgung ist.

**Claims**

1. Charging device (2) for a battery (5) of a motorised apparatus, said charging device (2) being adapted to be mounted on the motorised apparatus, and comprising:

- a housing;
- a first conversion module (3) arranged in the housing;
- a second conversion module (4) arranged in the housing, comprising a resonant circuit (13) having at least one resonance frequency;
- means (6) for controlling the first conversion module (3) arranged in the housing;

the first conversion module (3) being adapted to convert an input alternating current into an intermediate current and to supply the second conversion module (4) with said intermediate current;

the second conversion module (4) being adapted to convert the intermediate current into an output current and to supply the battery (5) with said output current;

the intermediate current being a direct current and the output current also being a direct current;

the means (6) for controlling being adapted to adjust the voltage of the intermediate current as a function of operating parameters of the second conversion module (3), according to the evolution of the charging of the battery (5).

2. Charging device (2) for a battery (5) of a motorised apparatus, said charging device (2) being adapted to be connected to the motorised apparatus external to said apparatus, and comprising:

- a housing;
- a first conversion module (3) arranged in the housing;
- a second conversion module (4) arranged in the housing, comprising a resonant circuit (13) having at least one resonance frequency;
- means (6) for controlling the first conversion module (3) arranged in the housing;

the first conversion module (3) being adapted to convert an input alternating current into an intermediate current and to supply the second conversion module (4) with said intermediate current;

the second conversion module (4) being adapted to convert the intermediate current into an output current and to supply the battery (5) with said output current;

the intermediate current being a direct current and the output current also being a direct current;

the means (6) for controlling being adapted to adjust the voltage of the intermediate current as a function of operating parameters of the second conversion module (3), according to the evolution of the charging of the battery (5).

3. Device according to claim 1 or 2, wherein the means (6) for controlling are adapted to adjust the voltage of the intermediate current as a function of the voltage and/or of the power and/or of the intensity of the output current.

4. Device according to any one of claims 1 to 3, wherein the second conversion module (4) is a switching conversion module comprising galvanic isolation, operating at a switching frequency, which preferably is variable; and preferably the means (6) for controlling are adapted to adjust the voltage of the intermediate current as a function of said switching frequency.

5. Device according to any one of claims 1 to 4, wherein the second conversion module (4) comprises a switching sub-module (12), associated with the resonant circuit (13), adapted to convert the intermediate current into a first alternating current with a switching frequency; a transformation sub-module (14) adapted to convert the first alternating current into a second alternating current; a rectification sub-module (15) adapted to convert the second alternating current into the output current; and wherein, preferably, the means (6) for controlling are adapted to adjust the voltage of the intermediate current so that the switching frequency can be adjusted to a setpoint value; said setpoint value being preferably equal to the resonance frequency or greater than the resonance frequency, and being preferably from 1.05 to 1.80 times the resonance frequency, and in a more particularly preferred manner from 1.10 to 1.50 times the resonance frequency.

6. Device according to any one of claims 1 to 5, wherein the resonant circuit (13) is a circuit of the LC type or of the LLC type comprising at least one capacitor (18) and at least one inductor (19, 20); and/or wherein the first conversion module (3) comprises a power factor correction circuit.

7. Device according to any one of claims 1 to 6, wherein the first conversion module (3) comprises a device for measuring the voltage of the intermediate current, as well as means for adjusting said voltage to a setpoint voltage; and wherein the means (6) for controlling are adapted to modulate the means for measuring the voltage of the intermediate current.

8. Device according to any one of claims 1 to 7, wherein the means (6) for controlling comprise a digital controller of the first conversion module (3).

9. Device according to any one of claims 1 to 8, adapted to operate with a voltage of the intermediate current that is from 270 to 440 V, preferably from 290 to 430 V; and/or a voltage of the output current that is from 20 to 550 V, preferably from 24 to 500 V; and/or a power of the output current that is from 500 to 6,000 W, preferably from 500 to 3,600 W.

10. Method for charging a battery of a motorised apparatus, comprising:

- a first conversion of an alternating supply current into an intermediate current, in a housing of a charging device;
- a second conversion of the intermediate current into an output current, using a conversion module comprising a resonant circuit having a resonance frequency, in said housing of the charging device;

- the supply of the battery with the output current; the intermediate current being a direct current and the output current also being a direct current;
the method further comprising:

- adjusting the voltage of the intermediate current as a function of parameters of the second conversion, according to the evolution of the charging of the battery;

the method being implemented inside the motorised apparatus.

11. Method for charging a battery of a motorised apparatus, comprising:

- a first conversion of an alternating supply current into an intermediate current, in a housing of a charging device;
- a second conversion of the intermediate current into an output current, using a conversion module comprising a resonant circuit having a resonance frequency, in said housing of the charging device;
- the supply of the battery with the output current; the intermediate current being a direct current and the output current also being a direct current;
the method further comprising:

- adjusting the voltage of the intermediate current as a function of parameters of the second conversion, according to the evolution of the charging of the battery;

the method being implemented outside the motorised apparatus.

12. Method according to claim 11 or 12, wherein the voltage of the intermediate current is adjusted as a function of the value of the voltage and/or of the power and/or of the intensity of the output current; and/or wherein the voltage of the intermediate current is adjusted as a function of the resonance frequency.

13. Method according to any one of claims 11 to 13, wherein the second conversion comprises an intermediate conversion of a direct current into an alternating current with a switching frequency, the switching frequency being preferably adjusted to a setpoint value, said setpoint value being preferably equal to the resonance frequency or greater than the resonance frequency, and being preferably from 1.05 to 1.80 times the resonance frequency, and in a more particularly preferred manner from 1.10 to 1.50 times the resonance frequency.

14. Method according to any one of claims 11 to 14, wherein the voltage of the intermediate current is from 270 to 440 V, preferably from 290 to 430 V; and/or wherein the voltage of the output current is from 20 to 550 V, preferably from 24 to 500 V; and/or wherein the power of the output current is from 500 to 6,000 W, preferably from 500 to 3,600 W.

15. Motorised apparatus (8) comprising the charging device (2) according to any one of claims 1 or 3 to 10, as well as the battery (5), said motorised apparatus (8) being preferably a vehicle, and more preferably an electrically powered automobile vehicle.

Fig. 1

Fig. 2

**Fig. 3**

**Fig. 4**

**Fig. 5**

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2947114
- WO 2010115867 A
- US 20070086222 A